# EUROPEAN PATENT SPECIFICATION

(11) **EP 1 519 510 B1**
(45) Date of publication and mention of the grant of the patent: **14.11.2007**
(21) Application number: 04022448.7
(22) Date of filing: 21.09.2004
(51) Int. Cl.: H04L 12/18

(54) **Multicast system and corresponding communication terminal**
System zur Mehrfachaussendung, sowie entsprechendes Kommunikationsendgerät
Système pour multidiffusion, et terminal de communication correspondant

(30) Priority: 26.09.2003 JP 2003334999
(43) Date of publication of application: 30.03.2005
(73) Proprietor: NEC CORPORATION, Tokyo (JP)
(72) Inventor: Shimazaki, Izumi, Tokyo (JP)
(74) Representative: von Samson-Himmelstjerna, Friedrich

(56) References cited:
- WO-A-00/57656
- US-A1- 2002 150 091
- US-A1- 2003 012 177
- US-A1- 2003 058 827

## Description

### BACKGROUND OF THE INVENTION

### 1. Field of the Invention

The present invention relates to a multicast system and, more particularly, to a multicast system in which three or more callers can carry out a conversation in real time using mobile terminals such as mobile phones.

### 2. Description of the Related Art

Conventionally, to carry out a conversation using communication terminals such as mobile phones, a service is available such as person-to-person calling or three-way calling utilizing a three-way calling service provided by switching equipment. A caller needs to input the telephone number of a callee into a communication terminal and transmit the telephone number to the switching equipment. Basically, the caller and the callee can talk at the same time.

On the other hand, there are a number of known methods for performing multicast communication, in which a voice is communicated to a plurality of callees by using a communication terminal. A user of the communication terminal can utilize a multicast communication service provided by a network carrier. The user first connects the communication terminal to a multicast device operated by the carrier. Next, the user transmits voice information to be multicast (in other words, simultaneously sent) and the multicast device records this information. The user transmits information about callees to whom the voice information is to be multicast, through key entry into the communication terminal. In accordance with the received information, the multicast device multicasts (in other words, simultaneously sends) the recorded voice information to the designated callees. The Japanese Unexamined Patent Publication No. 2000-134307 discloses a method of sequentially multicasting voice information only by operating a communication terminal such as a mobile phone. A user enters multicast destinations, for each group, into a multicast transmission table in the communication terminal. In multicast transmission, the user records a voice message to be multicast on a voice data storage unit, designates a group name, and inputs a multicast instruction. Then, the communication terminal starts multicast processing. The communication terminal calls one of telephone numbers registered in the designated group, and reproduces and transmits the voice data recorded on the voice data storage unit. After the transmission is completed, clearing processing is executed. The communication terminal executes the similar processing for each of the other telephone numbers registered in the group. When the transmission to all the telephone numbers registered in the same group is completed, the multicast processing is terminated. On the other hand, the Japanese Unexamined Patent Publication No. 2001-309022 discloses a technology by which a calling station connected to a local station via a public network can change a setting about a multicast transmission function of the local station.

However, a voice message cannot be multicast in real time to all the communication terminals of the designated group by the foregoing multicast method. Moreover, in the case of there being a large number of callees to which a message is to be multicast, information on the large number of multicast callees must be keyed every time a multicast is performed.

According to US 2003/012177 A1, a telephone, which initiates one-to-many communication with recipient telephones, transmits a signalling message identifying a one-to-many group (i. e. the recipient telephones) to a communication manager. The communication manager having received the signalling message information, which indicates the group, accesses a database to identify the individual recipient telephones.

US 2002/150091 A1 discloses a comparable approach. Information indicating members of a group is managed and stored under control of a group server. Source mobile station transmits, to the group server an identity of a group to which information of the source mobile station is to be multicast. The group server holds table for the group indicated by the source mobile station, which table contains the individual addresses of the group members. The individual addresses of group members or comparable information is not transmitted from the source mobile station to the group server.

### OBJECT OF THE INVENTION

It is an object of the present invention to improve multicasting of messages by multicasting a message of a communication terminal, preferably in real time, to a group of several communication terminals in easier and less complex manner.

### SUMMARY OF THE INVENTION

To solve the above object, the present invention provides a multicast system and a communication terminal according to the independent claims. Preferred embodiments thereof are defined in the dependent claims.

In the multicast system of the present invention, information is multicast to a plurality of communication terminals via a network. The multicast system includes a communication terminal and a multicast device. The communication terminal transmits information to be multicast to the multicast device. The multicast device receives the information from the communication terminal and multicasts the information to all communication terminals having a group code designated by the communication terminal, except the communication terminal. The multicast device can store the group code and identifications of the communication terminals included in the group.

The communication terminal of the present invention includes an information transmission unit, an information reception unit and a switch enabling information to be transmitted during its on-state. The communication terminal can include a storage unit for storing a group code that specifies a group of a plurality of communication terminals to which information is to be multicast.

The above-described multicast system, communication terminal and multicast device enable three or more callers to easily carry out a multicast conversation in real time using the communication terminals.

### BRIEF DESCRIPTION OF THE DRAWINGS

The above and other objects, features and advantages of the present invention will become apparent from the following detailed description when taken with the accompanying drawings
in which:
FIGURE shows an embodiment of a multicast system of the present invention.

### DETAILED DESCRIPTION OF THE PREFERRED EMBODIMENTS

Now, the preferred embodiments of the present invention will be described below. FIGURE is a block diagram of an embodiment of a multicast system of the present invention. This multicast system basically includes a communication terminal 100 such as a mobile phone or a home computer, and a multicast device 110. The communication terminal 100 is connected to the multicast device 110 via a network 120. In addition, a large number of communication terminals are similarly connected to the multicast device 110 via the network 120. The communication terminal 100 includes an information reception unit 101 for receiving information (e.g., a voice of a caller or a callee) from the multicast device 110, and an information transmission unit 103 for transmitting information (e.g., a voice of a caller or a callee) to the multicast device 110. A speaker 102 is connected to the information reception unit 101. The information transmission unit 103 is connected to a microphone 104 and a switch 105 which permits the transmission of information only during its on-state. The communication terminal 100 further includes a group code communication unit 106, a group code setting unit 107, and a group code storage unit 108. The operator of the communication terminal 100 sets a group code which specifies a group of predetermined callees (practically, telephone numbers of the callees), by means of the group code setting unit 107. The set group code is stored in the group code storage unit 108. When the operator starts to multicast information such as a voice, the group code communication unit 106 transmits the group code selected by the operator to the multicast device 110. The group code storage unit 108 can store the telephone numbers of communication terminals associated with the group code.

The communication terminal 100 includes a variety of devices (not shown) which are necessary to transmit and receive information. Moreover, the communication terminal 100 can multicast still pictures and moving pictures, in addition to voice information, if the terminal 100 has a camera function. The communication terminal 100 can include a storage unit for storing the static images and moving images. When the communication terminal 100 is a mobile phone, information to be multicast is transmitted to the multicast device 110 via a wireless base station and the network 120. For the communication terminal 100, a publicly-known IP telephone is applicable.

The multicast device 110, connected to the network 120, includes a control unit 111 and a storage unit 112. The control unit 111 receives a group code from the communication terminal 100 and multicasts information to communication terminals of a group having the group code. The storage unit 112 stores the group code transmitted from the communication terminal and identifications (one or more than one of numbers, letters and marks, i.e., telephone numbers, IP addresses, or the like) of the communication terminals to which the information is to be multicast. The unit 112 further stores information on the association between the identifications and the group code. When transmitting information, the communication terminal 100 can transmit the identifications of the communication terminals to which the information is to be multicast, in addition to the group code. However, the control unit 111 can receive and store a group code and the identifications of the communication terminals belonging to the group from the communication terminal 100 in advance. Moreover, the control unit 111 can set a group code on a group of telephone numbers received from a communication terminal, store the group code, and notify the communication terminal of the set group code.

The networks 120 include, for example, a normal public telephone network, a TCP/IP network such as the Internet, and the like. A router and the like can be connected to the network 120.

Now, an exemplary operation of the multicast system of the present invention will be described below. Using a built-in browser, the communication terminal 100 establishes a connection with a Web server annexed to the multicast device 110. When the communication terminal 100 is connected to the multicast device 110, a menu screen for the entry of a group code appears on a display portion of the communication terminal 100. An operator inputs a group code and transmits the group code and the telephone numbers of communication terminals associated with the group code via a network. At this time, if the telephone numbers have been already stored in the storage unit of the communication terminal, it is not necessary for the operator to input the telephone numbers again. If the multicast device has already stored group codes and associated telephone numbers, any of the group codes including the communication terminal 100 performing multicast can be displayed on the display portion. In this case, the operator selects a desired group code. The multicast device 110 stores the group code selected in the storage unit. If the telephone numbers are transmitted from the communication terminal 100, the multicast device 110 also stores the telephone numbers, associating the telephone numbers with the group code. Next, the operator of the communication terminal 100 turns on the switch 105 and thereby starts to transmit information (that is, voice). When the operator finishes transmitting the voice, the operator turns off the switch 105. That is, the voice information is transmitted to the multicast device 110 only while the switch 105 is on. Based on the group code transmitted from the communication terminal 100, the control unit 111 of the multicast device 110 multicasts the voice to communication terminals belonging to the group. The control unit 111 can reject receiving information from another communication terminal while the information is being received from the communication terminal and/or while the information is being multicast. That is, in the multicast system of the present invention, the number of callers who transmit information is always one. The communication terminal 100 can be set such that while receiving information, the communication terminal 100 cannot transmit information even if the switch 105 is turned on. When the information transmission from the communication terminal has been finished, a communication terminal which first turns on the switch 105 thereafter can preferentially execute information transmission.

When the communication terminals are mobile phones, the control unit 111 can exclude a mobile phone positioned in a no service area or a mobile phone turned off, from multicast targets. The control unit 111 can provide notification of data concerning a communication terminal excluded from the multicast targets or a communication terminal which has not received the information, to the communication terminal which has started multicasting or all the communication terminals belonging to the same group. This provided data can be displayed on the display portion of the communication terminal.

According to the present invention, three or more callers can easily multicast information such as voices in real time.

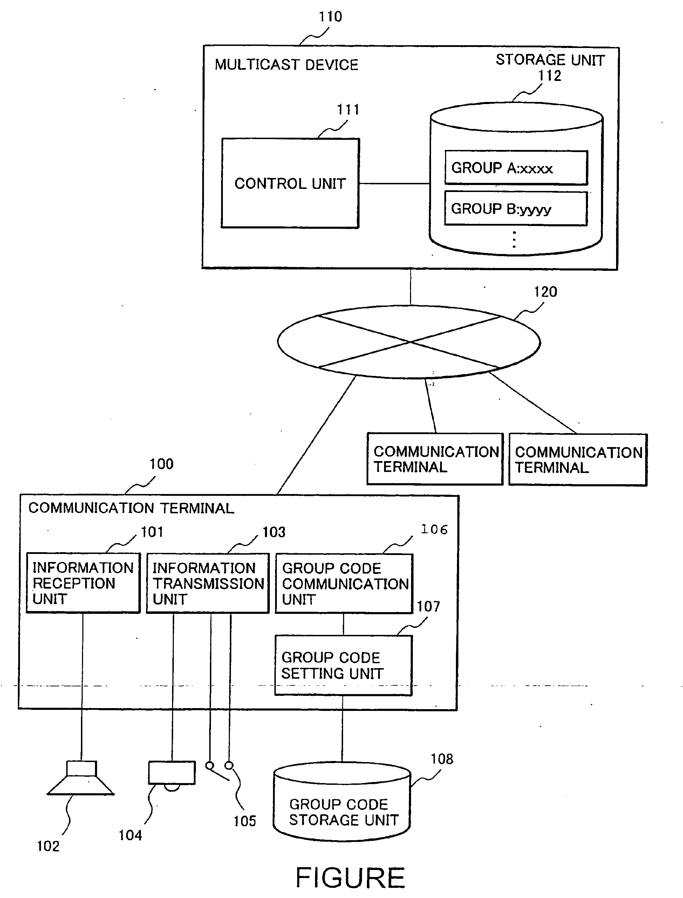

## Claims

1. A multicast system in which information is multicast to a plurality of communication terminals via a network, the system comprising:
a communication terminal (100); and
a multicast device (110),
wherein the communication terminal (100) is adapted to transmit information, which is to be multicast, to the multicast device (110), and
upon receiving the information from the communication terminal (100), the multicast device (110) is adapted to multicast the information to all communication terminals having a group code designated by the communication terminal (100) except to the communication terminal (100),
**characterized in that**
the communication terminal (100) is adapted to transmit to the multicast device (110) identification of the communication terminals to which the information is to be multicast, and
the multicast device (110) is adapted to store the received identification.

2. The multicast system according to claim 1,
wherein the communication terminal (100) is adpated to transmit to the multicast device (110) the identification of the communication terminals, to which the information is to be multicast, together with the group code.

3. The multicast system according to claim 1,
wherein the multicast device (110) is adapted to give a single group code to the identification transmitted from the communication terminal (100), and to notify the communication terminal (100) of the group code.

4. The multicast system according to one of the preceding claims,
wherein the communication terminal, which is adapted to start multicasting, is adapted to transmit the information to the multicast device during a predetermined period when transmission is permitted.

5. The multicast system according to claim 4,
wherein the period when transmission is permitted is a period when a switch (105) included in the communication terminal is in an on-state.

6. The multicast system according to claim 5,
wherein the switch (105) is adapted to be operated by an operator of the communication terminal, which is adapted to transmit the information.

7. The multicast system according to one of the preceding claims,
wherein the information is at least one of a sound, a still picture and a moving picture.

8. The multicast system according to one of the preceding claims,
wherein the communication terminal (100) is a mobile phone.

9. The multicast system according to one of the preceding claims,
wherein, while multicasting the information from the multicast device (110) to the communication terminals, the multicast device (110) is adapted to reject receiving information transmitted from the communication terminal (100).

10. The multicast system according to one of the preceding claims,
wherein, after transmitting the information from the multicast device (110) is finished, the multicast device (110) is adapted to multicast information first transmitted from a communication terminal thereafter to the other communication terminals of the same group.

11. The multicast system according to one of the preceding claims,
wherein the multicast device (110) is adapted to provide notification of data concerning a communication terminal which belongs to a group specified by the group code and does not receive the information, to at least one of the other communication terminals of the group.

12. The multicast system according to one of the preceding claims,
wherein the multicast system is adapted to operate in an IP phone system.

13. A communication terminal (100) being adapted to transmit information, which is to be multicast, to a multicast device (100) for multicasting the information to a plurality of communication terminals via a network (120), the communication terminal (100) comprising:
an information transmission unit (103),
an information reception unit (101);
a switch enabling information to be transmitted during an on-state thereof, and
a group code communication unit (106) for transmitting a group code, which specifies the plurality of communication terminals to which the information is to be multicast;
**characterized by**
a group code storage unit (108) for storing the group code and identification of the plurality of communication terminals, wherein the group code communication unit (106) is adapted to also transmit the identification.

14. The communication terminal (100) according to claim 12, further comprising
a group code setting unit (107) for setting the group code.

15. The communication terminal (100) according to claim 13 or 14, wherein the communication terminal (104) is a mobile phone.

16. The communication terminal (100) according to one of the claims 13 to 15, wherein the information to be multicast is at least one of a sound, a still picture and a moving picture.

17. The communication terminal (100) according to one of the claims 13 to 15, wherein the communication terminal is adapted to be disabled from transmitting the information to be multicast while the communication terminal (100) is receiving information.

## Patentansprüche

1. Multicast-System, bei dem Information per Multicast zu einer Mehrzahl von Kommunikationsendgeräten über ein Netzwerk übertragen wird, wobei das System umfasst:
ein Kommunikationsendgerät (100); und
eine Multicast-Vorrichtung (110),
wobei das Kommunikationsendgerät (100) ausgelegt ist, Information, die per Multicast zu übertragen ist, zu der Multicast-Vorrichtung (110) zu übertragen, und
die Multicast-Vorrichtung (110) ausgelegt ist, beim Empfang der Information von dem Kommunikationsendgerät (100), abgesehen von dem Kommunikationsendgerät (100) die Information zu allen Kommunikationsendgeräten per Multicast zu übertragen, die einen Gruppenkode aufweisen, der von dem Kommunikationsendgerät (100) angegeben wird,
**dadurch gekennzeichnet, dass**
das Kommunikationsendgerät (100) ausgelegt ist, eine Identifikation der Kommunikationsendgeräte, zu denen die Information per Multicast zu übertragen ist, zu der Multicast-Vorrichtung (110) zu übertragen, und
die Multicast-Vorrichtung (110) ausgelegt ist, die empfangene Identifikation zu speichern.

2. Multicast-System nach Anspruch 1,
bei dem das Kommunikationsendgerät (100) ausgelegt ist, die Identifikation der Kommunikationsendgeräte, zu denen die Information per Multicast zu übertragen ist, zusammen mit dem Gruppenkode zu der Multicast-Vorrichtung (110) zu übertragen.

3. Multicast-System nach Anspruch 1,
bei dem die Multicast-Vorrichtung (110) ausgelegt ist, einen einzelnen Gruppenkode der von dem Kommunikationsendgerät (100) übertragenen Information hinzuzufügen und dem Kommunikationsendgerät (100) den Gruppenkode mitzuteilen.

4. Multicast-System nach einem der vorherigen Ansprüche,
bei dem das Kommunikationsendgerät, das ausgelegt ist, eine Multicast-Übertragung zu beginnen, ausgelegt ist, die Information zu der Multicast-Vorrichtung während einer vorbestimmten Zeitdauer, wenn Übertragung zugelassen ist, zu übertragen.

5. Multicast-System nach Anspruch 4,
bei dem die Zeitdauer, wenn Übertragung zugelassen ist, eine Zeitdauer ist, wann ein in dem Kommunikationsendgerät enthaltener Schalter (105) sich in einem eingeschalteten Zustand befindet.

6. Multicast-System nach Anspruch 5,
bei dem der Schalter (105) ausgelegt ist, von einer Bedienperson des Kommunikationsendgeräts, das ausgelegt ist, die Information zu übertragen, betätigt zu werden.

7. Multicast-System nach einem der vorherigen Ansprüche,
bei dem die Information wenigstens eines von Schall, einem Standbild und einem bewegten Bild ist.

8. Multicast-System nach einem der vorherigen Ansprüche,
bei dem das Kommunikationsendgerät (100) ein mobiles Telefon ist.

9. Multicast-System nach einem der vorherigen Ansprüche,
bei dem, während die Information von der Multicast-Vorrichtung (110) zu den Kommunikationsendgeräten per Multicast übertragen wird, die Multicast-Vorrichtung (110) ausgelegt, es abzulehnen, von dem Kommunikationsendgerät (100) übertragene Information zu empfangen.

10. Multicast-System nach einem der vorherigen Ansprüche,
bei dem, nachdem eine Übertragung der Information von der Multicast-Vorrichtung (110) beendet ist, die Multicast-Vorrichtung (110) ausgelegt ist, zuerst von einem Kommunikationsendgerät übertragene Information danach zu den weiteren Kommunikationsendgeräten der gleichen Gruppe per Multicast zu übertragen.

11. Multicast-System nach einem der vorherigen Ansprüche,
bei dem die Multicast-Vorrichtung (110) ausgelegt ist, wenigstens einem der weiteren Kommunikationsendgeräte der Gruppe eine Benachrichtigung über Daten bereitzustellen, die ein Kommunikationsendgerät betreffen, das zu einer von dem Gruppenkode spezifizierten Gruppe gehört und die Information nicht empfängt.

12. Multicast-System nach einem der vorherigen Ansprüche,
bei dem das Multicast-System ausgelegt ist, in einem IP-Telefonsystem zu arbeiten.

13. Kommunikationsendgerät (100), das ausgelegt ist, Information, die per Multicast zu übertragen ist, zu einer Multicast-Vorrichtung (100) zu übertragen, um die Information zu einer Mehrzahl von Kommunikationsendgeräten über ein Netzwerk (120) per Multicast zu übertragen, wobei das Kommunikationsendgerät (100) umfasst:
eine Informationsübertragungseinheit (103);
eine Informationsempfangseinheit (101);
einen Schalter, der es ermöglicht, während eines eingeschalteten Zustands desselben Information zu übertragen; und
eine Gruppenkodekommunikationseinheit (106) zum Übertragen eines Gruppenkodes, der die Mehrzahl von Kommunikationsendgeräten spezifiziert, zu denen die Information per Multicast zu übertragen ist;
**gekennzeichnet durch**
eine Gruppenkodespeichereinheit (108) zum Speichern des Gruppenkodes und einer Identifikation der Mehrzahl von Kommunikationsendgeräten, wobei die Gruppenkodekommunikationseinheit (106) ausgelegt ist, auch die Identifikation zu übertragen.

14. Kommunikationsendgerät (100) nach Anspruch 12, ferner mit:
einer Gruppenkodeeinstelleinheit (107) zum Festlegen des Gruppenkodes.

15. Kommunikationsendgerät (100) nach Anspruch 13 oder 14, wobei das Kommunikationsendgerät (104) ein mobiles Telefon ist.

16. Kommunikationsendgerät (100) nach einem der Ansprüche 13 bis 15, wobei die per Multicast zu übertragende Information wenigstens eine eines Tons, eines Standbilds und eines bewegten Bilds ist.

17. Kommunikationsendgerät (100) nach einem der Ansprüche 13 bis 15, wobei das Kommunikationsendgerät ausgelegt ist, hinsichtlich einer Übertragung der per Multicast zu übertragenden Information deaktiviert zu werden, während das Kommunikationsendgerät (100) Information empfängt.

## Revendications

1. Système de multidiffusion, dans lequel une information est multidiffusée à une pluralité de terminaux de communication via un réseau, le système comprenant:
un terminal de communication (100) ; et
un dispositif de multidiffusion (110),
dans lequel le terminal de communication (100) est adapté pour transmettre une information, qui doit être multidiffusée, au dispositif de multidiffusion (110), et
lors de la réception de l'information en provenance du terminal de communication (100), le dispositif de multidiffusion (110) est adapté pour multidiffuser l'information à tous les terminaux de communication ayant un code de groupe désigné par le terminal de communication (100) excepté au terminal de communication (100),
**caractérisé en ce que**
le terminal de communication (100) est adapté pour transmettre au dispositif de multidiffusion (110) une identification des terminaux de communication auxquels l'information doit être multidiffusée, et
le dispositif de multidiffusion (110) est adapté pour stocker l'identification reçue.

2. Système de multidiffusion selon la revendication 1,
dans lequel le terminal de communication (100) est adapté pour transmettre au dispositif de multidiffusion (110) l'identification des terminaux de communication, auxquels l'information doit être multidiffusée, conjointement avec le code de groupe.

3. Système de multidiffusion selon la revendication 1,
dans lequel le dispositif de multidiffusion (110) est adapté pour donner un seul code de groupe à l'identification transmise depuis le terminal de communication (100), et pour notifier le code de groupe au terminal de communication (100).

4. Système de multidiffusion selon une des revendications précédentes,
dans lequel le terminal de communication, qui est adapté pour commencer la multidiffusion, est adapté pour transmettre l'information au dispositif de multidiffusion durant une période prédéterminée lorsque la transmission est permise.

5. Système de multidiffusion selon la revendication 4,
dans lequel la période où la transmission est permise est une période où un commutateur (105) inclus dans le terminal de communication est dans un état passant.

6. Système de multidiffusion selon la revendication 5,
dans lequel le commutateur (105) est adapté pour être opéré par un opérateur du terminal de communication, qui est adapté pour transmettre l'information.

7. Système de multidiffusion selon une des revendications précédentes,
dans lequel l'information est au moins une parmi un son, une image fixe et une image animée.

8. Système de multidiffusion selon une des revendications précédentes,
dans lequel le terminal de communication (100) est un téléphone mobile.

9. Système de multidiffusion selon une des revendications précédentes,
dans lequel, tout en multidiffusant l'information du dispositif de multidiffusion (110) aux terminaux de communication, le dispositif de multidiffusion (110) est adapté pour rejeter la réception d'informations transmises depuis le terminal de communication (100).

10. Système de multidiffusion selon une des revendications précédentes,
dans lequel, après que la transmission de l'information depuis le dispositif de multidiffusion (110) est terminée, le dispositif de multidiffusion (110) est adapté pour multidiffuser une information transmise d'abord depuis un terminal de communication par la suite aux autres terminaux de communication du même groupe.

11. Système de multidiffusion selon une des revendications précédentes,
dans lequel le dispositif de multidiffusion (110) est adapté pour fournir une notification de données concernant un terminal de communication, qui appartient à un groupe spécifié par le code de groupe et ne reçoit pas l'information, à au moins un des autres terminaux de communication du groupe.

12. Système de multidiffusion selon une des revendications précédentes,
dans lequel le système de multidiffusion est adapté pour fonctionner dans un système de téléphone IP.

13. Terminal de communication (100) qui est adapté pour transmettre une information, qui doit être multidiffusée, à un dispositif de multidiffusion (100) pour la multidiffusion de l'information à une pluralité de terminaux de communication via un réseau (120), le terminal de communication (100) comprenant :
une unité de transmission d'informations (103),
une unité de réception d'informations (101) ;
un commutateur permettant que des informations soient transmises durant son état passant, et
une unité de communication de code de groupe (106) pour transmettre un code de groupe, qui spécifie la pluralité de terminaux de communication auxquels l'information doit être multidiffusée ;
**caractérisé par**
une unité de stockage de code de groupe (108) pour stocker le code de groupe et une identification de la pluralité de terminaux de communication, où l'unité de communication de code de groupe (106) est adaptée pour transmettre également l'identification.

14. Terminal de communication (100) selon la revendication 12, comprenant en outre
une unité d'établissement de code de groupe (107) pour établir le code de groupe.

15. Terminal de communication (100) selon la revendication 13 ou 14, dans lequel le terminal de communication (104) est un téléphone mobile.

16. Terminal de communication (100) selon une des revendications 13 à 15, dans lequel l'information à multidiffuser est au moins une parmi un son, une image fixe et une image animée.

17. Terminal de communication (100) selon une des revendications 13 à 15, dans lequel le terminal de communication est adapté pour être empêché de transmettre l'information à multidiffuser pendant que le terminal de communication (100) reçoit des informations.
